# EUROPÄISCHE PATENTSCHRIFT

(11) **EP 2 825 788 B1**
(45) Veröffentlichungstag und Bekanntmachung des Hinweises auf die Patenterteilung: **20.04.2016**
(21) Anmeldenummer: 13708757.3
(22) Anmeldetag: 28.02.2013
(51) Int. Cl.: F16D 13/75

(54) **REIBUNGSKUPPLUNG MIT NACHSTELLEINRICHTUNG**
FRICTION CLUTCH WITH READJUSTMENT DEVICE
EMBRAYAGE À FRICTION ÉQUIPÉ D'UN DISPOSITIF DE RATTRAPAGE DE JEU

(30) Priorität: 16.03.2012 DE 102012204201
(43) Veröffentlichungstag der Anmeldung: 21.01.2015
(73) Patentinhaber: Schaeffler Technologies AG & Co. KG, 91074 Herzogenaurach (DE)
(72) Erfinder: HERKOMMER, Dominik, 69198 Schriesheim (DE); DAIKELER, René, 77830 Bühlertal (DE)
(86) Internationale Anmeldenummer: PCT/EP2013/054087
(87) Internationale Veröffentlichungsnummer: WO 2013/135493

(56) Entgegenhaltungen:
- EP-A1- 1 568 905
- DE-A1-102010 034 813

## Beschreibung

Die Erfindung betrifft eine Reibungskupplung mit einer Gegendruckplatte und einer drehfest und axial verlagerbar gegenüber dieser angeordneten Anpressplatte, einem mit der Gegendruckplatte fest verbundenen Deckelteil, einer zwischen Anpressplatte und Deckelteil eingespannten Hebelfeder mit einem umlaufenden Kraftrand und radial nach innen erweiterten, über den Umfang verteilten Hebeln und radial nach außen erweiterten Abstützbereichen, einer Kupplungsscheibe mit zwischen Gegendruckplatte und Anpressplatte abhängig von einer an den Hebeln aufgebrachten axialen Einrückkraft entgegen der Wirkung einer Belagfederung in Reibeingriff bringbaren Reibbelägen, einer wirksam zwischen der Gegendruckplatte und der Anpressplatte der Belagfederung entgegenwirkende Kompensationsfeder sowie einer Nachstelleinrichtung mit einer in Form eines geöffneten Rings auf der Hebelfeder angeordneten, mittels radial nach innen erweiterter Sensierzungen an den Hebeln befestigten Antriebsfeder mit einer an einem Ringende angeordneten, mit einem verdrehbar an der Hebelfeder angeordneten, an der gegenüber liegenden Seite ein Schneckenrad aufweisenden Ritzel kämmenden Klinke.

Derartige Reibungskupplungen sind beispielsweise zu einer Doppelkupplung zusammengefasst aus der DE 10 2009 005 743 A1 bekannt. Hierbei ist eine gemeinsame Gegendruckplatte vorgesehen, der von beiden Seiten eine drehfest und axial verlagerbar angeordnete Anpressplatte jeweils einer Reibungskupplung zugeordnet ist. Beide Reibungskupplungen werden mittels jeweils einer Hebelfeder zugedrückt, welche an einer Seite der Doppelkupplung beidseitig eines fest mit der Gegendruckplatte verbundenen Deckelteils angeordnet sind und hierzu zwischen diesem und der Anpressplatte abstützen. Dabei wird eine Reibungskupplung direkt von der ihr zugeordneten Hebelfeder und die andere mittels eines mit der Anpressplatte verbundenen, die Gegendruckplatte und das Deckelteil übergreifenden und mit der dieser zugeordneten Hebelfeder in Wirkeingriff tretenden Zugankers beaufschlagt, so dass bei einer axialen Beaufschlagung der radial inneren Hebelspitzen mittels jeweils eines Betätigungssystems in Richtung Gegendruckplatte die eine Reibungskupplung von der Hebelfeder direkt zugedrückt und die andere Reibungskupplung mittels des Zugankers zugezogen wird.

Dabei weisen beide Reibungskupplungen eine selbstnachstellende Nachstelleinrichtung zur Kompensation des Verschleißes der zwischen Gegendruckplatte und Anpressplatte angeordneten Reibbeläge auf, die im Sinne einer Tellerfederhebelbaugruppe der DE 10 2008 010 997 A1 ausgebildet ist. Hierbei wird auf an einem ringförmigen Kraftrand über den Umfang verteilten radial ausgerichteten Hebeln der Hebelfeder eine Antriebsfeder in Form eines geöffneten Rings angeordnet, welche über auf den Hebeln befestigten Sensierzungen mit der Hebelfeder verbunden ist. Die Antriebsfeder verändert abhängig von der sich über einen Einrückweg verändernden Form der Hebelfeder ihren Umfang, wobei an einem Ende eine Klinke angeordnet ist, die mit einem verdrehbar an der Hebelfeder befestigten Ritzel kämmt. Auf der anderen Seite der Hebelfeder ist an dem Ritzel ein Schneckenrad vorgesehen, welches ein mit in Umfangsrichtung ansteigenden Rampen versehenes Bauteil antreibt, das direkt zwischen Hebelfeder und Anpressplatte beziehungsweise zwischen Hebelfeder und Zuganker wirksam vorgesehen ist. Wird der Einrückweg infolge eines Verschleißes der Reibbeläge erhöht, tritt eine stärkere Verformung der Hebelfeder im geschlossenen Zustand der Reibungskupplung auf, so dass der Umfang der Antriebsfeder verringert wird und die Klinke einen oder mehrere Zähne des Ritzels überspringt und bei sich öffnender Reibungskupplung die dabei gebildete Vorspannung der Antriebsfeder das entlastete Bauteil verdreht, so dass die um einen vorgegebenen Betrag verdrehten Rampen den Verschleiß ausgleichen.

r Auch DE 10 201 034 813 A1 offenbart eine Reibungskupplung mit einer Nachstelleinrichtung mit einem Schneckenrad, einem Ritzel und einer Klinke, die das Ritzel verdreht. Die den Reibeingriff zu den Gegenreibflächen der Gegendruckplatte und der Anpressplatte ausbildenden Reibbeläge sind gegeneinander mit einer Belagfederung versehen, die neben den die Anpressplatte drehfest und axial verlagerbar an der Gegendruckplatte oder am Deckelteil aufnehmenden Blattfedern beim Schließen der Reibungskupplung der Einrückkraft des Betätigungssystems entgegenwirken. Um die Belagfederung zumindest im Bereich der maximales Moment übertragenden Reibungskupplung zumindest teilweise zu kompensieren, wird in der nicht vorveröffentlichten deutschen Patentanmeldung Nr. 10 2011 084 840.1 eine zwischen Anpressplatte der Gegendruckplatte beziehungsweise Deckelteil und der Anpressplatte angeordnete Kompensationsfeder vorgeschlagen, welche beispielsweise als überspannte Tellerfeder ausgebildet sein kann. Die Kennlinie der Belagfederung kann sich aufgrund von Alterung, Setzvorgängen und dergleichen ändern, so dass die Kompensationsfeder über Lebensdauer die erwünschte Kompensationsfunktion einer teilweisen oder vollständigen Kompensation nur unzureichend erfüllt. Infolgedessen ist ein Einrückkraftverhalten der Reibungskupplung über Lebensdauer Schwankungen unterworfen.

Aufgabe der Erfindung ist daher, eine Reibungskupplung vorzuschlagen, deren Einrückkraftverhalten über Lebensdauer verbessert ist.

Die Aufgabe wird durch eine Reibungskupplung mit einer Gegendruckplatte und einer drehfest und axial verlagerbar gegenüber dieser angeordneten Anpressplatte, einem mit der Gegendruckplatte fest verbundenen Deckelteil, einer zwischen Anpressplatte und Deckelteil eingespannten Hebelfeder mit einem umlaufenden Kraftrand und radial nach innen erweiterten, über den Umfang verteilten Hebeln und radial nach außen erweiterten Abstützbereichen, einer Kupplungsscheibe mit zwischen Gegendruckplatte und Anpressplatte abhängig von einer an den Hebeln aufgebrachten axialen Einrückkraft entgegen der Wirkung einer Belagfederung in Reibeingriff bringbaren Reibbelägen, einer wirksam zwischen der Gegendruckplatte und der Anpressplatte der Belagfederung entgegenwirkende Kompensationsfeder sowie einer Nachstelleinrichtung mit einer in Form eines geöffneten Rings auf der Hebelfeder angeordneten, mittels radial nach innen erweiterter Sensierzungen an den Hebeln befestigten Antriebsfeder mit einer an einem Ringende angeordneten, mit einem verdrehbar an der Hebelfeder angeordneten, an der gegenüber liegenden Seite ein Schneckenrad aufweisenden Ritzel kämmenden Klinke gelöst, wobei das Schneckenrad in Antriebsverbindung mit der Kompensationsfeder oder dem Deckelteil angeordnet ist, sich abhängig von einer sich einrückkraftabhängig verlagernden Klinke das Ritzel verdreht und sich mittels der sich verdrehenden Schnecke zwischen Hebelfeder und Kompensationsfeder oder Deckelteil eine Relativverdrehung einstellt, wobei sich abhängig von der Relativverdrehung ein Radius eines Anlagebereichs der Kompensationsfeder ändert.

Durch die eine Änderung des Radius des Anlagebereichs wird die Einspanngeometrie der Kompensationsfeder über Lebensdauer korrigiert, so dass die Kennlinie der Kompensationsfeder der sich über Lebensdauer ändernden Kennlinie der Belagfederung nachgeführt werden kann. Die Einrückkraft der Reibungskupplung wird dabei über Lebensdauer zumindest insoweit stabilisiert, wie diese von der Änderung der Kennlinie der Belagfederung abhängt. Ein infolge der Abnahme der Reibbelagstärke zu kompensierender Einrückweg wird bevorzugt in anderer Weise, beispielsweise in einem Betätigungssystem wie Kupplungsaktor oder einer zwischen der Hebelfeder und diesem angeordneten Einrückmechanik, ausgeglichen. Eine Nachstellung der Kompensationsfeder wird dabei eingeleitet, wenn infolge durch eine Änderung der Belagfederung erhöhter Einrückkräfte die Hebelfeder über ein vorgegebenes Maß während eines Einrückvorgangs elastisch vorspannt, so dass sich der Umfang der auf der Hebelfeder angebrachten Antriebsfeder gegenüber dem Umfang des Kraftrands der Hebelfeder um ein vorgegebenes Maß verändert, so dass die Klinke einen oder mehrere Zähne des Ritzels überspringt. In diesem Sinne erfolgt die Nachstellung wie Aktivierung der Nachstelleinrichtung kraftgesteuert.

Gemäß einer vorteilhaften Ausführungsform ist der Auflagebereich aus zwei gegeneinander verspannten Profilbereichen gebildet, von denen einer der Kompensationsfeder und der andere der Anpressplatte wirksam zugeordnet ist, wobei ein erster Profilbereich über den Umfang verteilte radial ausgerichtete Profilflächen und ein zweiter Profilbereich spiralförmige über den Umfang komplementär verteilte Profilflächen aufweist. Durch die von der Antriebsfeder über das Ritzel und Schneckenrad bewirkte Relativverdrehung zwischen den Profilbereichen verlagern sich die über den Umfang verteilt angeordneten Auflagepunkte zwischen den radial ausgerichteten und den spiralförmigen Profilflächen radial, so dass sich der Radius der Auflagepunkte und damit infolge der sich geändert einstellenden Hebelgeometrie die Kennlinie ändert. Dabei wird durch die Änderung des Radius über die Relativverdrehung die Richtung und Steigung der spiralförmigen Profilflächen vorgegeben und an die Änderung der Kennlinie der Belagfederung angepasst. Es versteht sich, dass in weiteren Ausführungsformen beide Profilbereiche Profilflächen mit einem radialen und einem in Umfangsrichtung vorgesehenen Anteil aufweisen können, beispielsweise gegenläufig spiralförmig ausgebildet sein können.

Bei einer direkt durch die Hebelfeder verlagerten Anpressplatte ist die Kompensationsfeder zwischen der Anpressplatte und der Gegendruckplatte oder zwischen der Anpressplatte oder dem Deckelteil verspannt. Hierbei können einerseits der erste Profilbereich an der Kompensationsfeder und andererseits der zweite Profilbereich an der Anpressplatte oder am Deckelteil vorgesehen sein. Bei aus Blech hergestellten Bauteilen wie der Kompensationsfeder und/oder dem Deckelteil kann die Profilfläche des ersten Profilbereichs einteilig in das Blechteil geprägt sein. Bei massiven, beispielsweise geschmiedeten oder gegossenen Bauteilen wie beispielsweise der Anpressplatte oder der Gegendruckplatte können die Profilflächen des entsprechenden Profilbereichs im Herstellungsvorgang bereits vorgesehen sein und gegebenenfalls mechanisch nachbearbeitet werden oder als Auflageteile fest aufgebracht, beispielsweise geschweißt, vernietet oder in ähnlicher Weise befestigt werden.

Bei einer mittels zwischen der Hebelfeder und der Anpressplatte angeordneten Zugankers zugezogenen Reibungskupplung und zwischen dem Deckelteil und dem Zuganker verspannten Kompensationsfeder können die Profilbereiche zwischen Zuganker und Kompensationsfeder oder alternativ zwischen Deckelteil und Kompensationsfeder vorgesehen sein. Hierbei können beide Profilflächen der Profilbereiche einteilig aus den aus Blech geformten Bauteilen -Kompensationsfeder, Zuganker, Deckelteil - geprägt sein.

Die Relativverdrehung zwischen den die Änderung des Radius bewirkenden Profilbereichen erfolgt, indem ein Bauteil mit einem Profilbereich drehfest gehalten und das andere Bauteil verdrehbar angeordnet ist. Beispielsweise kann die Hebelfeder drehfest gegenüber dem Deckelteil aufgenommen sein und die Kompensationsfeder verdrehbar zwischen Deckelteil oder Gegendruckplatte und Anpressplatte eingespannt sein. Insbesondere bei Anordnungen mit Zuganker kann die Hebelfeder verdrehbar am Deckelteil aufgenommen und die Kompensationsfeder drehfest angeordnet sein. Hierbei ist bevorzugt die Kompensationsfeder zwischen Zuganker und Deckelteil angeordnet, wobei sich die radial außen gegen den Zuganker verspannte Hebelfeder gegenüber diesem verdreht, wenn eine Nachstellung erfolgt. Die Hebelfeder wird dabei durch die Antriebsfeder angetrieben, indem sich das Schneckenrad an einer Verzahnung der drehfest eingespannten Kompensationsfeder abstützt.

Im Weiteren kann die Kompensationsfeder in vorteilhafterweise und insbesondere aus Kosten- und Herstellungsgründen zur Verminderung der Anzahl der Bauteile der Reibungskupplung einteilig in die Hebelfeder aufgenommen sein. Hierbei ist die Hebelfeder gegenüber dem Deckelteil verdrehbar angeordnet und wird durch die Klinke, das Ritzel und das Schneckenrad angetrieben. Der Radius des Auflagebereichs der Hebelfeder beziehungsweise der in dieser integrierten Kompensationsfeder ändert sich dabei über die Relativverdrehung, so dass derselbe Effekt wie bei einer getrennten Ausbildung von Kompensationsfeder und Hebelfeder einstellt. Die Hebelfeder weist zur einteiligen Ausbildung mit der Kompensationsfeder unterschiedliche Steifigkeitsbereiche auf.

Die Erfindung wird anhand des in den Figuren 1 bis 9 dargestellten Ausführungsbeispiels näher erläutert. Dabei zeigen:
- Figur 1: einen schematischen Teilschnitt einer Reibungskupplung mit Nachstelleinrichtung,
- Figur 2: eine Ansicht einer Hebelfeder mit Antriebsfeder der Reibungskupplung der Figur 1,
- Figur 3: eine Detailansicht von der Rückseite der Hebelfeder der Figur 2,
- Figur 4: eine schematische Schnittdarstellung der Hebelfeder der Figur 2 im Normalbetrieb,
- Figur 5: eine schematische Schnittdarstellung der Hebelfeder der Figur 2 im Nachstellbetrieb,
- Figur 6: eine schematische Ansicht eines Profilbereichs
- Figur 7: eine schematische Ansicht eines zu dem Profilbereich der Figur 6 komplementären Profilbereichs,
- Figur 8: eine Wirkskizze der beiden aufeinander gelegten Profilbereiche der Figuren 6 und 7
und
- Figur 9: einen schematisch dargestellten Schnitt durch eine Reibungskupplung mit einteiliger Hebel- und Kompensationsfeder.

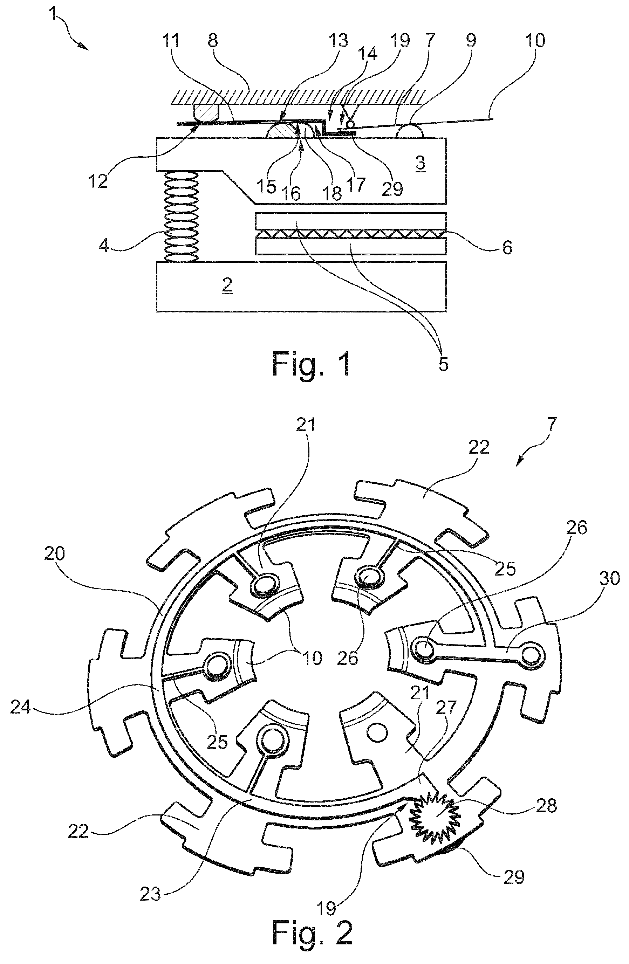

Die Figur 1 zeigt im Teilschnitt und in schematischer Darstellung die Reibungskupplung 1. Weitere Informationen zum allgemeinen Aufbau derartiger Reibungskupplungen können dem genannten Stand der Technik entnommen werden. Die Reibungskupplung 1 enthält die Gegendruckplatte 2 und die gegenüber dieser drehfest und mittels der Blattfedern 4 - hier als Blattfederpaket dargestellt - axial verlagerbar angeordnete ringförmige Anpressplatte 3. Die Reibungskupplung 1 ist im nicht betätigten Zustand geöffnet, indem die Anpressplatte 3 von den Blattfedern 4 von der Gegendruckplatte 2 soweit beabstandet ist, dass kein Reibeingriff zu den beispielsweise an einer Kupplungsscheibe angeordneten Reibbelägen 5 ausgebildet wird. Die miteinander unter Bildung der Belagfederung 6 verbundenen Reibbeläge 5 bilden unter Verspannung der Anpressplatte 3 entgegen der Wirkung der Blattfedern 4 einen Reibeingriff mit Anpressplatte 3 und Gegendruckplatte 2, wobei die Verspannkraft von der Hebelfeder 7 bereitgestellt wird, die sich an dem mit der Gegendruckplatte 2 fest verbundenen Deckelteil 8 axial abstützt und die Anpressplatte 3 an dem Auflagebereich 9 beaufschlagt. Hierzu wird die Hebelfeder 7 an deren radial inneren Hebelfederbereichen 10 von einem Betätigungssystem wie Einrücksystem beaufschlagt.

Insbesondere bei maximal zu übertragendem Moment muss die Anpressplatte stark unter Komprimierung der Belagfederung vorgespannt werden. Zur Verringerung der an den Hebelfederbereichen 10 notwendigen Einrückkraft ist die Kompensationsfeder 11 vorgesehen, die in dem gezeigten Ausführungsbeispiel zwischen dem Auflagebereich 12 des Deckelteils 8 und dem Auflagebereich 13 der Anpressplatte 3 verspannt und bevorzugt als überspannte Tellerfeder ausgebildet ist. Die Kompensationsfeder 11 wirkt der Belagfederung 6 entgegen und verringert dadurch die Einrückkraft. Zur Anpassung der Kennlinie der Kompensationsfeder 11 an die sich über die Lebens- beziehungsweise Betriebsdauer der Reibungskupplung 1 ändernde Kennlinie der Belagfederung 6 ist die Nachstelleinrichtung 14 vorgesehen, die die beiden Profilbereiche 15, 16 mit den Profilflächen 17, 18 sowie die an der Hebelfeder 7 angeordnete Sensiereinrichtung 19 umfasst. Die Sensiereinrichtung 19 erfasst anhand einer bei vollständig eingerückter Reibungskupplung 1 durch eine veränderte Kennlinie der Belagfederung erhöhten Einrückkraft einen Nachstellbedarf und verdreht mittels des in die Kompensationsfeder 11 eingreifenden Schneckenrads 29 eine Verdrehung der verdrehbar angeordneten Kompensationsfeder 11, so dass die Profilflächen 17, 18 einen Auflagebereich 13 bei geändertem Radius einstellen und aufgrund der sich geänderten Einspannverhältnisse der Kompensationsfeder 11 für eine Nachführung deren Kennlinie an die geänderte Kennlinie der Belagfederung 6 einstellen. Hierdurch wird die Einrückkraft bis auf die Kraftschwankungen zwischen zwei Schaltvorgängen der Sensiereinrichtung 19 konstant gehalten.

Figur 2 zeigt die Hebelfeder 7 der Figur 1 in konstruktiver Ausbildung mit dem ringförmigen, bevorzugt auf Höhe des Auflagebereichs 9 der Figur 1 angeordneten Kraftrand 20, an dem über den Umfang verteilt und radial nach innen ausgerichtet die Hebel 21 mit den Hebelfedereichen 10 einteilig angeordnet sind. Bevorzugt auf den Durchmessern der Hebel 21 sind radial nach außen erweitert die Abstützbereiche 22 der Hebelfeder 7 zur Abstützung der Hebelfeder 7 an dem Deckelteil 8 (Figur 1) vorgesehen. Die Sensiereinrichtung 19 enthält die Antriebsfeder 23, deren Kraftrand 24 auf dem Kraftrand 20 der Hebelfeder angelegt ist und deren nach radial innen erweiterte Sensierzungen 25 jeweils mit einem Hebel 21 radial innen mittels eines Niets 26 verbunden sind. Die ringförmige, geöffnete Antriebsfeder 23 ist an einem Ringende 30 fest mit der Hebelfeder 7 verbunden und weist an deren anderem Ringende die Klinke 27 auf, die mit dem an der Hebelfeder 7 verdrehbar aufgenommenen Ritzel 28 kämmt. Auf der Innenseite des Ritzels 28 ist das Schneckenrad 29 angeordnet, das die Kompensationsfeder 11 der Figur 1 im Nachstellfall antreibt.

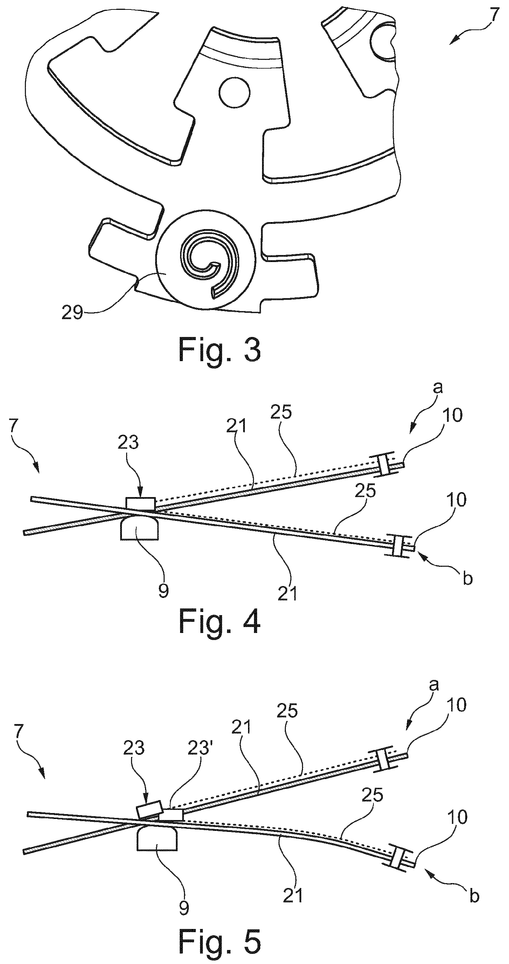

Figur 3 zeigt eine Rückansicht der Hebelfeder 7 mit dem Schneckenrad 29, welches beispielsweise in eine Stirnverzahnung oder einen Zahnstangenabschnitt der Kompensationsfeder 11 der Figur 1 eingreift und bei Verdrehung drehantreibt.

Die Figuren 4 und 5 zeigen zur Erläuterung der Nachstellfunktion der Sensiereinrichtung 19 der Figur 2 die Hebelfeder 7 mit den Hebeln 21 und den darauf gelagerten Sensierzungen 25 der Antriebsfeder 23 jeweils in der geöffneten Position a und in der geschlossenen Position b der Reibungskupplung 1 der Figur 1. Die Hebelfeder 7 wird an deren Hebelfederbereich 10 axial beaufschlagt und verlagert mit einer Einrückkraft den Auflagebereich 9 der Anpressplatte 3 der Figur 1. Hierbei ist in Figur 4 der Normalzustand der Reibungskupplung 1 gezeigt. In der geöffneten Position a sind die Hebel aufgestellt und werden in geschlossener Position b der Reibungskupplung nach innen verlagert. Im Normalzustand werden bei maximal zu übertragendem Moment die Hebel 21 nur unwesentlich durchgebogen, da die Kompensationsfeder 11 der Figur 1 die Belagfederung in ausreichender Weise kompensiert. In Figur 5 ist der Nachstellzustand dargestellt, bei dem die Kompensationsfeder die Belagfederung nicht mehr ausreichend kompensiert. Ausgehend von der geöffneten Position a werden in der geschlossenen Position b zur Übertragung des maximalen Moments die Hebel 21 infolge einer größeren erforderlichen Einrückkraft durchgebogen und die radial innen vernieteten Sensierzungen 25 verlagert, so dass die Antriebsfeder 23 auf ihrer ursprünglichen Position auf dem Kraftrand der Hebelfeder 7 nach radial innen verlagert wird, die durch die Antriebsfeder 23' repräsentiert wird. Hierdurch verlagert sich die Klinke 27 in dem Ritzel 28 der Figur 2. Hierdurch wird beim Öffnen der Reibungskupplung 1 von der Antriebsfeder 23 eine Spannung auf das Ritzel 28 ausgeübt. Infolge der sich an der Kompensationsfeder 11 bei sich öffnender Reibungskupplung 1 lösender Vorspannung wird diese nun von dem Ritzel 28 über das Schneckenrad verdreht.

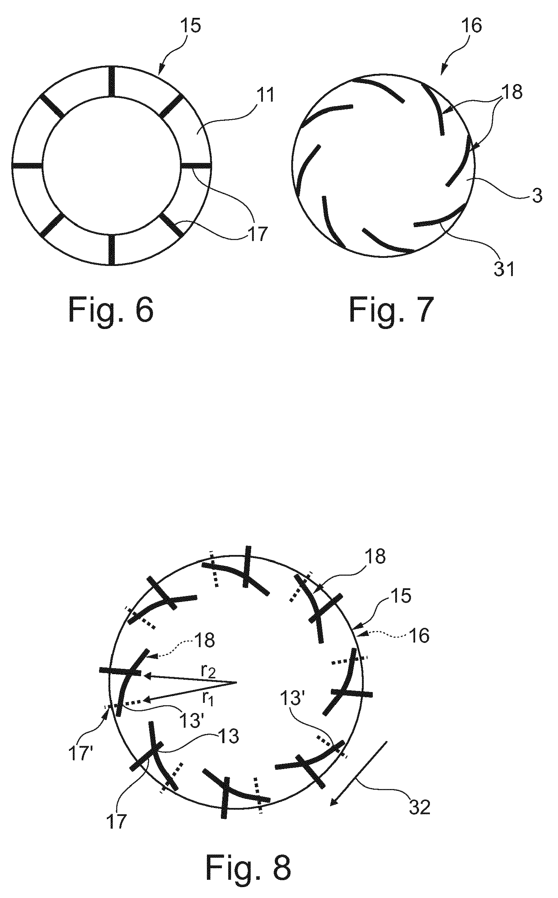

Die Figur 6 zeigt eine schematisch dargestellte Ansicht des Profilbereichs 15 der Kompensationsfeder 11 der Figur 1. Der Profilbereich 15 ist aus über den Umfang verteilten, beispielsweise aus der Kompensationsfeder 11 ausgeformten oder ausgestellten radial ausgerichteten Profilflächen 17 gebildet.

Figur 7 zeigt eine schematisch dargestellte Ansicht des Profilbereichs 16 der Anpressplatte 3 der Figur 1. Der Profilbereich 16 ist aus über den Umfang verteilt angeordneten, beispielsweise aus an der Anpressplatte 3 fest aufgenommenen Auflageteilen 31 gebildeten Profilflächen 18 gebildet. Die Form der Profilflächen 18 ist spiralförmig. Es versteht sich, dass die in den Figuren 6 und 7 dargestellten Profilbereiche 16, 17 auch in umgekehrter Weise an der Anpressplatte 3 beziehungsweise an der Kompensationsfeder angeordnet sein können.

Die Figur 8 zeigt eine schematische Darstellung der beiden aufeinander gelegten Profilbereiche 15, 16 der Figuren 6, 7 mit den Profilflächen 17, 17', 18. Im nicht nachgestellten Zustand zwischen den gestrichelt dargestellten Profilflächen 17' und den Profilflächen 18 bilden sich die Auflagebereiche 13' mit dem Radius r₁ aus. Im Nachstellfall verdrehen sich die beiden Profilbereiche 15, 16 in Richtung des Pfeils 32 gegeneinander, so dass die Profilflächen 17, 18 die neuen Auflagebereiche 13 mit dem Radius r₂ ausbilden. Durch die geänderte Einspannsituation der Kompensationsfeder 11 wird die Kennlinie dieser an die Kennlinie der Belagfederung 6 (Figur 1) angepasst, bis eine erneute Nachstellung erforderlich ist.

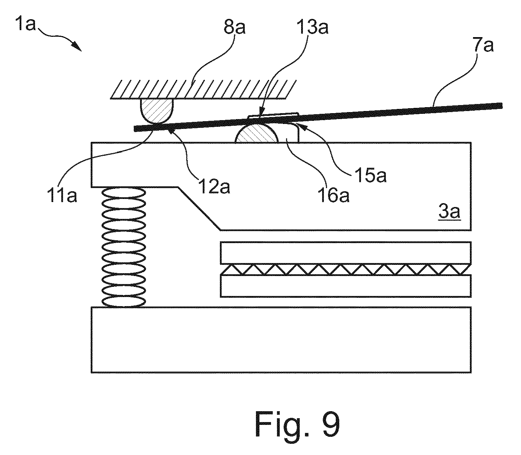

In Abänderung der Reibungskupplung 1 der Figur 1 zeigt die Reibungskupplung 1a der Figur 9 die einteilig in die Hebelfeder 7a vorzugsweise im Bereich deren Kraftrands aufgenommene Kompensationsfeder 11a. Hierbei stützt sich der Bereich der Hebelfeder 7a mit der Kompensationsfeder 11a an dem fest am Deckelteil 8a angeordneten Auflagebereich 12a und an dem Auflagebereich 13a der Anpressplatte 3a ab. Die an dem Auflagebereich 13a vorgesehenen Profilbereiche 15a, 16a entsprechen dabei bezüglich ihrer Funktion weitestgehend den Profilbereichen 15, 16 der Figuren 1, 6, 7 und 8. Die Nachstellung mit der Änderung des Radius des Auflagebereichs 13a erfolgt durch eine Relativverdrehung der Hebelfeder 7a gegenüber der Anpressplatte 3a beziehungsweise dem Deckelteil 8a. In entsprechender Ausbildung des Antriebs der Kompensationsfeder 11 der Figur 1 mittels des Ritzels 18 der Figur 2 erfolgt in der Reibungskupplung 1 der Figur der Antrieb der Hebelfeder 7a mittels des Ritzels, wobei das Schneckenrad sich an einem mit dem Deckelteil 8a oder der Anpressplatte 3a oder einem anderen mit diesen verbundenen Bauteil oder an diesen direkt abstützt.

### Bezugszeichenliste

- 1: Reibungskupplung
- 1a: Reibungskupplung
- 2: Gegendruckplatte
- 3: Anpressplatte
- 3a: Anpressplatte
- 4: Blattfeder
- 5: Reibbelag
- 6: Belagfederung
- 7: Hebelfeder
- 7a: Hebelfeder
- 8: Deckelteil
- 8a: Deckelteil
- 9: Auflagebereich
- 10: Hebelfederbereich
- 11: Kompensationsfeder
- 11a: Kompensationsfeder
- 12: Auflagebereich
- 12a: Auflagebereich
- 13: Auflagebereich
- 13a: Auflagebereich
- 13': Auflagebereich
- 14: Nachstelleinrichtung
- 15: Profilbereich
- 15a: Profilbereich
- 16: Profilbereich
- 16a: Profilbereich
- 17: Profilfläche
- 17': Profilfläche
- 18: Profilfläche
- 19: Sensiereinrichtung
- 20: Kraftrand
- 21: Hebel
- 22: Abstützbereich
- 23: Antriebsfeder
- 23': Antriebsfeder
- 24: Kraftrand
- 25: Sensierzunge
- 26: Niet
- 27: Klinke
- 28: Ritzel
- 29: Schneckenrad
- 30: Ringende
- 31: Auflageteil
- 32: Pfeil
- a: geöffnete Position
- b: geschlossene Position
- r₁: Radius
- r₂: Radius

## Patentansprüche

1. Reibungskupplung (1, 1a) mit einer Gegendruckplatte (2) und einer drehfest und axial verlagerbar gegenüber dieser angeordneten Anpressplatte (3, 3a), einem mit der Gegendruckplatte (2) fest verbundenen Deckelteil (8, 8a), einer zwischen Anpressplatte (3, 3a) und Deckelteil (8, 8a) eingespannten Hebelfeder (7, 7a) mit einem umlaufenden Kraftrand (20) und radial nach innen erweiterten, über den Umfang verteilten Hebeln (21) und radial nach außen erweiterten Abstützbereichen (22), einer Kupplungsscheibe mit zwischen Gegendruckplatte (2) und Anpressplatte (3, 3a) abhängig von einer an den Hebeln (21) aufgebrachten axialen Einrückkraft entgegen der Wirkung einer Belagfederung (6) in Reibeingriff bringbaren Reibbelägen (5), sowie einer Nachstelleinrichtung (14) mit einer in Form eines geöffneten Rings auf der Hebelfeder (7, 7a) angeordneten, mittels radial nach innen erweiterter Sensierzungen (25) an den Hebeln (21) befestigten Antriebsfeder (23, 23') mit einer an einem Ringende angeordneten, mit einem verdrehbar an der Hebelfeder (7, 7a) angeordneten, an der gegenüber liegende Seite ein Schneckenrad (29) aufweisenden Ritzel (28) kämmenden Klinke (27), **dadurch gekennzeichnet, dass** die Reibungskupplung eine zwischen der Gegendruckplatte (2) und der Anpressplatte (3, 3a) der Belagfederung (6) entgegenwirkende Kompensationsfeder (11, 11a) aufweist, und dass
das Schneckenrad (29) in Antriebsverbindung mit der Kompensationsfeder (11) oder dem Deckelteil (8a) angeordnet ist, sich abhängig von einer sich einrückkraftabhängig verlagernden Klinke (27) das Ritzel (28) verdreht und sich mittels des sich verdrehenden Schneckenrads (29) zwischen Hebelfeder (7, 7a) und Kompensationsfeder (11) oder Deckelteil (8a) eine Relativverdrehung einstellt, wobei sich abhängig von der Relativverdrehung ein Radius (r₁, r₂) eines Auflagebereichs (13, 13') der Kompensationsfeder (11, 11a) ändert.

2. Reibungskupplung (1, 1a) nach Anspruch 1, **dadurch gekennzeichnet, dass** der Auflagebereich (13, 13a, 13') aus zwei gegeneinander verspannten Profilbereichen (15, 15a, 16, 16a) gebildet ist, von denen einer der Kompensationsfeder (11, 11a) und der andere der Anpressplatte (3, 3a) wirksam zugeordnet ist, wobei ein erster Profilbereich (15, 15a) über den Umfang verteilte radial ausgerichtete Profilflächen (17, 17') und ein zweiter Profilbereich (16, 16a) spiralförmige über den Umfang komplementär verteilte Profilflächen (18) aufweist.

3. Reibungskupplung (1, 1a) nach Anspruch 1 oder 2, **dadurch gekennzeichnet, dass** der erste Profilbereich (15, 15a) an der Kompensationsfeder (11, 11 a) und der zweite Profilbereich (16, 16a) an der Anpressplatte (3, 3a) vorgesehen ist.

4. Reibungskupplung (1, 1a) nach Anspruch 3, **dadurch gekennzeichnet, dass** die Profilfläche (17, 17') des ersten Profilbereichs (15, 15a) einteilig aus der Kompensationsfeder (11, 11a) geprägt ist.

5. Reibungskupplung (1) nach Anspruch 3 oder 4, **dadurch gekennzeichnet, dass** die Profilfläche (18) des zweiten Profilbereichs (16) aus mit der Anpressplatte (3) verbundenen Auflageteilen (31) gebildet ist.

6. Reibungskupplung nach Anspruch 2, **dadurch gekennzeichnet, dass** bei einer mittels zwischen der Hebelfeder und der Anpressplatte angeordneten Zugankers zugezogenen Reibungskupplung und zwischen dem Deckelteil und dem Zuganker verspannten Kompensationsfeder die Profilbereiche zwischen Zuganker und Kompensationsfeder vorgesehen sind.

7. Reibungskupplung nach Anspruch 6, **dadurch gekennzeichnet, dass** beide Profilflächen der Profilbereiche einteilig aus der Kompensationsfeder beziehungsweise dem Zuganker geprägt sind.

8. Reibungskupplung (1) nach einem der Ansprüche 1 bis 7, **dadurch gekennzeichnet, dass** die Hebelfeder (7) drehfest gegenüber dem Deckelteil (8) aufgenommen und die Kompensationsfeder (11) verdrehbar eingespannt ist.

9. Reibungskupplung nach einem der Ansprüche 1 bis 7, **dadurch gekennzeichnet, dass** die Hebelfeder verdrehbar am Deckelteil aufgenommen und die Kompensationsfeder drehfest angeordnet ist.

10. Reibungskupplung (1a) nach einem der Ansprüche 1 bis 4, **dadurch gekennzeichnet, dass** die Kompensationsfeder (11a) einteilig in die Hebelfeder (7a) integriert ist, die Hebelfeder (7a) von dem Schneckenrad (29) drehangetrieben ist und sich bei Verdrehung ein Radius des Auflagebereichs (13a) ändert.

## Claims

1. Friction clutch (1, 1a) having a back-pressure plate (2) and a pressure plate (3, 3a) which is arranged fixedly such that it cannot be rotated and can be displaced axially with respect to the former, a cover part (8, 8a) which is connected fixedly to the back-pressure plate (2), a lever spring (7, 7a) which is clamped in between the pressure plate (3, 3a) and the cover part (8, 8a) with a circumferential force edge (20) and levers (21) which are distributed over the circumference and are widened radially towards the inside, and supporting regions (22) which are widened radially towards the outside, a clutch plate with friction linings (5) which can be brought into frictional engagement between the back-pressure plate (2) and the pressure plate (3, 3a) counter to the action of a lining suspension means (6) in a manner which is dependent on an axial engagement force which is applied at the levers (21), and an adjusting device (14) with a drive spring (23, 23') which is arranged in the form of an open ring on the lever spring (7, 7a) and is fastened to the levers (21) by means of sensing tongues (25) which are widened radially towards the inside, with a pawl (27) which is arranged at one ring end and meshes with a pinion (28) which is arranged rotatably on the lever spring (7, 7a) and has a worm gear (29) on the opposite side, **characterized in that** the friction clutch has a compensation spring (11, 11a) which counteracts the lining suspension means (6) between the back-pressure plate (2) and the pressure plate (3, 3a), and **in that** the worm gear (29) is arranged in a drive connection with the compensation spring (11) or the cover part (8a), the pinion (28) rotates in a manner which is dependent on a pawl (27) which is displaced in a manner dependent on the engaging force, and a relative rotation is set between the lever spring (7, 7a) and the compensation spring (11) or the cover part (8a) by means of the rotating worm gear (29), a radius (r₁, r₂) of a bearing region (13, 13') of the compensation spring (11, 11a) changing in a manner which is dependent on the relative rotation.

2. Friction clutch (1, 1a) according to Claim 1, **characterized in that** the bearing region (13, 13a, 13') is formed from two profile regions (15, 15a, 16, 16a) which are braced against one another and of which one is assigned effectively to the compensation spring (11, 11a) and the other is assigned effectively to the pressure plate (3, 3a), a first profile region (15, 15a) having radially oriented profile faces (17, 17') which are distributed over the circumference, and a second profile region (16, 16a) having spiral profile faces (18) which are distributed over the circumference in a complementary manner.

3. Friction clutch (1, 1a) according to Claim 1 or 2, **characterized in that** the first profile region (15, 15a) is provided on the compensation spring (11, 11a) and the second profile region (16, 16a) is provided on the pressure plate (3, 3a).

4. Friction clutch (1, 1a) according to Claim 3, **characterized in that** the profile face (17, 17') of the first profile region (15, 15a) is stamped in one piece from the compensation spring (11, 11a).

5. Friction clutch (1) according to Claim 3 or 4, **characterized in that** the profile face (18) of the second profile region (16) is formed from bearing parts (31) which are connected to the pressure plate (3).

6. Friction clutch according to Claim 2, **characterized in that**, in the case of a friction clutch which is pulled in by means of a tie rod which is arranged between the lever spring and the pressure plate, and in the case of a compensation spring which is braced between the cover part and the tie rod, the profile regions are provided between the tie rod and the compensation spring.

7. Friction clutch according to Claim 6, **characterized in that** both profile faces of the profile regions are stamped in one piece from the compensation spring and the tie rod.

8. Friction clutch (1) according to one of Claims 1 to 7, **characterized in that** the lever spring (7) is received fixedly such that it cannot be rotated with respect to the cover part (8), and the compensation spring (11) is clamped in such that it can be rotated.

9. Friction clutch according to one of Claims 1 to 7, **characterized in that** the lever spring is received on the cover part such that it can be rotated, and the compensation spring is arranged fixedly such that it cannot be rotated.

10. Friction clutch (1a) according to one of Claims 1 to 4, **characterized in that** the compensation spring (11a) is integrated in one piece into the lever spring (7a), the lever spring (7a) is driven rotationally by the worm gear (29), and a radius of the bearing region (13a) changes during rotation.

## Revendications

1. Embrayage à friction (1, 1a) comprenant une plaque de contre-pression (2) et une plaque de pressage (3, 3a) disposée par rapport à celle-ci de manière solidaire en rotation et déplaçable axialement, une partie de couvercle (8, 8a) connectée fixement à la plaque de contre-pression (2), un ressort de levier (7, 7a) serré entre la plaque de pressage (3, 3a) et la partie de couvercle (8, 8a) avec un bord de force périphérique (20) et des leviers (21) élargis radialement vers l'intérieur, répartis sur la périphérie et des régions d'appui (22) élargies radialement vers l'extérieur, un disque d'embrayage avec des garnitures de friction (5) pouvant être amenées en engagement de friction, à l'encontre de l'effet d'une suspension des garnitures (6), entre la plaque de contre-pression (2) et la plaque de pressage (3, 3a) en fonction d'une force d'embrayage axiale appliquée aux leviers (21), ainsi qu'un dispositif de rattrapage du jeu (14) avec un ressort d'entraînement (23, 23') disposé sous la forme d'une bague ouverte sur le ressort de levier (7, 7a), fixé au moyen de langues de capteur (25) élargies radialement vers l'intérieur aux leviers (21), avec un cliquet (27) disposé à une extrémité de la bague, s'engrenant, avec un pignon (28) disposé de manière rotative sur le ressort de levier (7, 7a), présentant, sur le côté opposé, une roue à denture hélicoïdale (29), **caractérisé en ce que** l'embrayage à friction présente un ressort de compensation (11, 11a) agissant à l'encontre de la suspension des garnitures (6) entre la plaque de contre-pression (2) et la plaque de pressage (3, 3a), et **en ce que** la roue à denture hélicoïdale (29) est disposée en liaison d'entraînement avec le ressort de compensation (11) ou avec la partie de couvercle (8a), le pignon (28) tourne en fonction d'un cliquet (27) se déplaçant en fonction de la force d'embrayage, et une rotation relative s'établit au moyen de la roue à denture hélicoïdale (29) tournant entre le le ressort de levier (7, 7a) et le ressort de compensation (11) ou la partie de couvercle (8a), un rayon (r₁, r₂) d'une région d'appui (13, 13') du ressort de compensation (11, 11a) variant en fonction de la rotation relative.

2. Embrayage à friction (1, 1a) selon la revendication 1, **caractérisé en ce que** la région d'appui (13, 13a, 13') est formée de deux régions profilées serrées l'une contre l'autre (15, 15a, 16, 16a) dont l'une est associée activement au ressort de compensation (11, 11a) et dont l'autre est associée activement à la plaque de pressage (3, 3a), une première région profilée (15, 15a) présentant des surfaces profilées (17, 17') orientées radialement réparties sur la périphérie et une deuxième région profilée (16, 16a) présentant des surfaces profilées (18) en forme de spirale, réparties de manière complémentaire sur la périphérie.

3. Embrayage à friction (1, 1a) selon la revendication 1 ou 2, **caractérisé en ce que** la première région profilée (15, 15a) est prévue au niveau du ressort de compensation (11, 11a) et la deuxième région profilée (16, 16a) est prévue au niveau de la plaque de pressage (3, 3a).

4. Embrayage à friction (1, 1a) selon la revendication 3, **caractérisé en ce que** la surface profilée (17, 17') de la première région profilée (15, 15a) est gaufrée d'une seule pièce à partir du ressort de compensation (11, 11a).

5. Embrayage à friction (1) selon la revendication 3 ou 4, **caractérisé en ce que** la surface profilée (18) de la deuxième région profilée (16) est formée de parties d'appui (31) connectées à la plaque de pressage (3).

6. Embrayage à friction selon la revendication 2, **caractérisé en ce que** dans le cas d'un embrayage à friction tiré en traction au moyen d'un tirant d'ancrage disposé entre le ressort de levier et la plaque de pressage, et d'un ressort de compensation serré entre la partie de couvercle et le tirant d'ancrage, les régions profilées sont prévues entre le tirant d'ancrage et le ressort de compensation.

7. Embrayage à friction selon la revendication 6, **caractérisé en ce que** les deux surfaces profilées des régions profilées sont gaufrées d'une seule pièce à partir du ressort de compensation ou du tirant d'ancrage.

8. Embrayage à friction (1) selon l'une quelconque des revendications 1 à 7, **caractérisé en ce que** le ressort de levier (7) est reçu de manière solidaire en rotation par rapport à la partie de couvercle (8), et le ressort de compensation (11) est serré de manière rotative.

9. Embrayage à friction selon l'une quelconque des revendications 1 à 7, **caractérisé en ce que** le ressort de levier est reçu de manière rotative au niveau de la partie de couvercle et le ressort de compensation est disposé de manière solidaire en rotation.

10. Embrayage à friction (1a) selon l'une quelconque des revendications 1 à 4, **caractérisé en ce que** le ressort de compensation (11a) est intégré d'une seule pièce dans le ressort de levier (7a), le ressort de levier (7a) est entraîné en rotation par la roue à denture hélicoïdale (29) et lors de la rotation, un rayon de la région d'appui (13a) varie.
